# FASCICULE DE BREVET EUROPEEN

(11) **EP 3 069 044 B1**
(45) Date de publication et mention de la délivrance du brevet: **28.08.2019**
(21) Numéro de dépôt: 14806030.4
(22) Date de dépôt: 07.11.2014
(51) Int. Cl.: F16F 15/123, F16F 15/134

(54) **SUPPORT POUR DISPOSITIF D'AMORTISSEMENT POUR SYSTÈME DE TRANSMISSION DE VÉHICULE**
TRÄGER FÜR EINE DÄMPFUNGSVORRICHTUNG FÜR EIN FAHRZEUGGETRIEBESYSTEM
SUPPORT FOR A DAMPING DEVICE FOR A VEHICLE TRANSMISSION SYSTEM

(30) Priorité: 12.11.2013 FR 1361041
(43) Date de publication de la demande: 21.09.2016
(73) Titulaire: Valeo Embrayages, 80009 Amiens Cedex 2 (FR)
(72) Inventeur: VERHOOG, Roel, F-60190 Gournay Sur Aronde (FR); MIOT, Maxime, 80080 Amiens (FR); FREY, Catherine, F-80260 Talmas (FR); BRIOLET, Thimothée, F-59110 La Madeleine (FR)
(74) Mandataire: Cardon, Nicolas
(86) Numéro de dépôt international: PCT/FR2014/052848
(87) Numéro de publication internationale: WO 2015/071577

(56) Documents cités:
- EP-A2- 0 522 718
- EP-A2- 1 589 260
- DE-A1-102010 054 290
- FR-A1- 2 794 505
- FR-A1- 2 847 630
- US-A1- 2005 023 103

## Description

La présente invention concerne un support pour dispositif d'amortissement de système de transmission de véhicule.

Le dispositif d'amortissement peut par exemple être intégré à un système de transmission de véhicule automobile, ce système étant notamment un embrayage simple, un embrayage double ou encore un convertisseur de couple.

Un tel dispositif comprend généralement un support mobile en rotation autour d'un axe et présentant des fenêtres recevant des ressorts. Chaque fenêtre présente, dans un plan perpendiculaire à l'axe de rotation du support, encore appelé « le plan » ou « ledit plan » par la suite, un bord radialement intérieur, un bord radialement extérieur, et deux bords latéraux reliant les bords radialement intérieur et extérieur. Chaque ressort s'étend dans une fenêtre entre deux extrémités longitudinales, et chaque extrémité longitudinale du ressort vient en appui contre un bord latéral de la fenêtre lorsque le support est au repos, c'est-à-dire lorsqu'il est immobile et que des rondelles n'exercent pas de force sur lui. Les ressorts peuvent amortir les vibrations entre le support et deux rondelles de guidage entourant axialement le support. Chaque ressort peut présenter au moins une extrémité longitudinale sur laquelle est ménagé un chanfrein.

Des rondelles de guidage sont divulguées par les demandes DE 10 2010 054 290, FR 2 794 505 et EP 1 589 260. Un tel support est divulgué par la demande FR 2 847 630 qui est considéré comme état de la technique le plus proche.

La nécessité d'assurer une bonne tenue mécanique d'un tel support lorsque des contraintes sont exercées sur ce dernier impose un dimensionnement précis de la fenêtre. Ce dimensionnement précis se rapporte par exemple à la valeur du rayon de la portion de cercle formée par la portion radialement extérieure de chaque bord latéral de la fenêtre. Ce rayon doit alors avoir une valeur minimale pour assurer cette bonne tenue mécanique.

En outre, lors de la mise en rotation du support, chaque ressort est déplacé radialement vers l'extérieur dans la fenêtre. Il est alors souhaitable de garantir, même lorsque le support tourne et qu'un couple est exercé sur les ressorts, un placage satisfaisant contre une paroi de la fenêtre d'une surface plane appartenant à l'extrémité du ressort portant le chanfrein mais différente de ce chanfrein. En l'absence de ce placage, le ressort n'est pas correctement positionné dans la fenêtre et se retrouve alors dans un espace plus réduit, d'où il résulte une compression plus importante du ressort, et donc une contrainte plus élevée exercée sur les spires adjacentes à ses extrémités. Le fonctionnement et la durée de vie du ressort sont alors affectés.

Dans le cas considéré, l'obtention d'un tel placage nécessite que la hauteur du chanfrein, égale dans ledit plan à la longueur de la projection de la surface du chanfrein sur le prolongement de ladite surface plane de l'extrémité du ressort, soit supérieure à la valeur du rayon de la portion de cercle formant la portion radialement extérieure du bord latéral de la fenêtre.

Or, le dimensionnement de ce rayon pour assurer une bonne tenue mécanique du support impose pour ce rayon des valeurs supérieures aux valeurs maximales admissibles pour la hauteur du chanfrein.

Il est ainsi difficile de garantir à la fois une bonne tenue mécanique du support et un placage satisfaisant de l'organe de rappel contre la paroi latérale de la fenêtre correspondante.

Il existe ainsi un besoin pour permettre de bénéficier d'un support qui présente une bonne tenue mécanique, tout en assurant un placage satisfaisant de l'organe de rappel élastique reçu dans la fenêtre ménagée dans ce support lorsque cet organe de rappel élastique se déplace dans la fenêtre sous l'effet de forces centrifuges exercées lors de la rotation du support et que l'organe de rappel élastique est soumis à un couple.

L'invention a pour objet de répondre à ce besoin et elle y parvient, selon l'un de ses aspects, à l'aide d'un dispositif d'amortissement pour système de transmission de véhicule, comprenant un support mobile en rotation autour d'un axe et comprenant au moins une fenêtre présentant dans un plan perpendiculaire à l'axe de rotation:
- un bord radialement intérieur,
- un bord radialement extérieur, et
- deux bords latéraux,
une portion d'un au moins des bords latéraux délimitant une cavité communiquant avec la fenêtre et s'étendant en éloignement de cette fenêtre,
un organe de rappel élastique reçu dans la fenêtre, l'organe de rappel élastique s'étendant dans la fenêtre entre deux extrémités longitudinales étant chacune en regard d'un bord latéral respectif de la fenêtre, l'une au moins desdites extrémités longitudinales de l'organe de rappel élastique comprenant notamment un chanfrein, et cette extrémité longitudinale étant en regard du bord latéral délimitant la cavité, caractérisé en ce que :la portion du bord latéral de la fenêtre délimitant la cavité est la portion radialement extérieure dudit bord latéral de façon à permettre à la cavité d'accueillir une partie de l'extrémité longitudinale de l'organe de rappel élastique lorsque ce dernier est déporté radialement vers l'extérieur du fait de la rotation du support.

La cavité forme ainsi un dégagement protégeant la zone du support la plus exposée aux contraintes mécaniques de l'usure qui serait engendrée sur celle-ci par un frottement avec l'organe de rappel élastique.

En outre, l'existence de cette cavité, ménagée uniquement au niveau du bord latéral de la fenêtre, n'affecte ainsi pas la forme du bord radialement extérieur de la fenêtre, ce qui permet de ne pas dégrader le maintien radial dans la fenêtre de l'organe de rappel élastique par ce bord radialement extérieur de la fenêtre.

La cavité s'étend en éloignement de la fenêtre, c'est-à-dire qu'elle forme une excroissance par rapport à la fenêtre.

Au sens de la présente demande, «radial » signifie « dans un plan perpendiculaire à l'axe de rotation» et « axial » signifie « parallèlement à l'axe de rotation».

La portion du bord latéral délimitant la cavité peut être formée par une succession de segments incurvés.

D'autres formes sont en variante possible. La portion du bord latéral délimitant la cavité peut par exemple être formée par une succession de lignes brisées.

La succession de segments incurvés peut présenter successivement des valeurs de rayon permettant de diffuser la contrainte exercée sur le support vers la partie de ce dernier radialement comprise entre le bord radialement extérieur de la fenêtre et la surface radialement extérieure du support, garantissant ainsi une bonne tenue mécanique du support.

Les segments incurvés peuvent être tels que la portion du bord latéral délimitant la cavité présente une partie convexe et une partie concave. Autrement dit, cette portion du bord latéral peut présenter dans ledit plan au moins deux points d'inflexion.

Lorsque l'on se déplace dans ledit plan le long du contour de la fenêtre depuis le bord radialement extérieur de la fenêtre vers le bord radialement intérieur de la fenêtre, on peut d'abord se déplacer le long de la partie convexe du contour de la cavité puis le long de la partie concave dudit contour. La partie convexe peut présenter d'abord un grand rayon puis un rayon moyen. La partie concave peut présenter un petit rayon, inférieur aux rayons de la partie convexe.

La portion du bord latéral de la fenêtre délimitant la cavité est la portion radialement extérieure dudit bord latéral. Ce positionnement permet à la cavité d'accueillir une partie de l'extrémité longitudinale de l'organe de rappel élastique lorsque ce dernier est déporté radialement vers l'extérieur du fait de la rotation du support, ce dernier tournant par exemple à quelques milliers de tr/min.

Le bord latéral peut présenter une portion rectiligne et la présence de la cavité peut permettre à l'extrémité longitudinale de l'organe de rappel élastique de translater vers l'extérieur lorsque le support tourne. En l'absence de cavité, cette extrémité longitudinale de l'organe de rappel élastique viendrait au contact d'une portion du bord latéral de la fenêtre ne définissant pas de cavité, et ce contact entraînerait un déplacement de cette extrémité de l'organe de rappel élastique, qui ne serait alors plus plaquée contre la portion rectiligne dudit bord latéral, mais pourrait venir au contact du bord radialement extérieur de la fenêtre et creuser la matière de ce bord.

Dans tout ce qui précède, la cavité peut ne pas s'étendre pas radialement au-delà du bord radialement extérieur de la fenêtre, s'étendant alors exclusivement radialement en-deçà du bord radialement extérieur de la fenêtre.

Dans tout ce qui précède, la cavité peut être délimitée radialement intérieurement et radialement extérieurement par des bords qui convergent lorsque l'on s'éloigne de la fenêtre. Ces bords peuvent uniquement être en convergence, c'est-à-dire converger l'un vers l'autre sur toute leur longueur.

Le support peut comprendre deux cavités communiquant avec la fenêtre, chaque bord latéral comprenant alors une portion, notamment formée par une succession de segments incurvés, délimitant une cavité s'étendant en éloignement de la fenêtre et communiquant avec cette fenêtre. Autrement dit, une cavité peut coopérer avec chaque extrémité longitudinale de l'organe de rappel élastique lorsque ce dernier est reçu dans la fenêtre.

Le support peut comprendre une pluralité de fenêtres, par exemple trois fenêtres, et les fenêtres peuvent être uniformément réparties sur le pourtour de l'axe de rotation. Toutes les fenêtres peuvent présenter un même contour identique.

Pour chaque fenêtre, les bords latéraux peuvent diverger l'un de l'autre lorsque l'on s'éloigne de l'axe de rotation.

La présence d'une cavité au niveau du bord latéral en regard de l'extrémité longitudinale de l'organe de rappel élastique présentant un chanfrein permet d'éviter les inconvénients mentionnés précédemment, notamment le mauvais plaquage de cette extrémité de l'organe de rappel élastique contre le bord latéral.

L'extrémité longitudinale chanfreinée de l'organe de rappel élastique peut présenter dans ledit plan une face tournée vers ledit bord latéral de la fenêtre, cette face comprenant :
- une portion sensiblement rectiligne, et
- le chanfrein, le chanfrein étant apte à venir en regard de la cavité.

Comme mentionné ci-dessus, la cavité peut être délimitée par la portion radialement la plus extérieure du bord latéral, de sorte que l'extrémité longitudinale chanfreinée peut venir en regard de la cavité sous l'effet des forces centrifuges exercées lorsque le support tourne.

La portion sensiblement rectiligne de ladite face peut présenter une partie en regard de la portion rectiligne du bord latéral et apte à coopérer avec cette dernière par venue en contact, et une partie en regard de la cavité. La venue en contact de cette partie de la face de l'extrémité de l'organe de rappel élastique contre la portion rectiligne du bord latéral peut procurer le placage satisfaisant mentionné ci-dessus.

Lorsque l'organe de rappel élastique est un ressort hélicoïdal, la longueur de la cavité, mesurée dans ledit plan entre deux bord opposés de la cavité et parallèlement à la portion rectiligne du bord latéral et dans le prolongement de celui-ci, peut être inférieure à 75%, notamment être de l'ordre de 2/3, de la somme de la longueur dans ledit plan :
- de la portion sensiblement rectiligne de ladite face de l'extrémité longitudinale de l'organe de rappel élastique et,
- de la projection sur le prolongement de cette portion sensiblement rectiligne du chanfrein.

Du fait de cette valeur, la fraction restante de cette face peut être plaquée contre la portion sensiblement rectiligne dudit bord latéral.

Le rapport entre la longueur de la cavité, telle que mesurée ci-dessus, et la longueur du bord latéral de la fenêtre dont une portion délimite la cavité peut être supérieur à 0,1, notamment à 0,2.

L'extrémité longitudinale de l'organe de rappel élastique peut être apte à coopérer, par sa zone radialement extérieure, avec une portion du bord radialement extérieur de la fenêtre. Afin d'éviter un creusement de cette portion du bord radialement extérieur de la fenêtre par l'organe de rappel élastique, cette portion du bord radialement extérieur de la fenêtre peut être amincie lors de la réalisation de la cavité. Du fait de cet amincissement, la partie du support s'étendant radialement entre le bord radialement extérieur du support et le bord radialement extérieur de la fenêtre au niveau de ladite portion présente localement une sous-épaisseur. La valeur de cette sous-épaisseur peut être déterminée de manière à ce que cette sous-épaisseur corresponde au creusement traduisant l'usure liée au fonctionnement du dispositif d'amortissement formé par le support et l'organe de rappel élastique. Autrement dit, le profil du bord radialement extérieur de la fenêtre peut au niveau de la portion dudit bord apte à coopérer avec l'organe de rappel élastique localement différer à l'issue de la réalisation de la fenêtre d'un profil prédéfini et cette différence peut être calculée de manière à ce que ladite portion du bord radialement extérieur présente dès la fabrication du support le profil résultant de l'usure du dispositif d'amortissement lors de son fonctionnement.

Le dispositif d'amortissement peut comprendre deux rondelles de guidage axialement décalées, chaque organe de rappel élastique étant d'une part apte à coopérer avec les rondelles de guidage et d'autre part avec le support. Le support peut être axialement disposé entre les rondelles de guidage et les organes de rappel élastique peuvent permettre d'amortir les vibrations entre le support et les rondelles de guidage. Un tel support est encore appelé « voile ». Les deux rondelles de guidage sont notamment solidarisées entre elles.

L'une des rondelles de guidage peut porter des garnitures de friction. En variante, le support porte des garnitures de friction.

L'invention a encore pour objet, selon un autre de ses aspects, un système de transmission pour véhicule automobile comprenant un dispositif d'amortissement tel que défini ci-dessus.

Le système de transmission est par exemple un embrayage simple, un embrayage double ou encore un convertisseur de couple.

Le système de transmission transmet par exemple des couples supérieurs à quelques centaines de Nm, par exemple supérieurs à 500 Nm et, lors du fonctionnement du système de transmission, le support peut présenter une vitesse de rotation de quelques milliers de tr/min, par exemple entre 6000 et 7000 tr/min.

Le véhicule automobile peut être un véhicule thermique utilisant comme carburant l'essence, un véhicule hybride essence/électrique ou un véhicule électrique.

L'invention a encore pour objet, selon un autre de ses aspects, un procédé de réalisation d'un support de dispositif d'amortissement pour système de transmission de véhicule, dans lequel on ménage dans un support mobile en rotation autour d'un axe au moins une fenêtre, la fenêtre présentant dans un plan perpendiculaire audit axe :
- un bord radialement intérieur,
- un bord radialement extérieur, et
- deux bords latéraux,
la fenêtre étant apte à recevoir un organe de rappel élastique de manière à ce que dernier s'étende dans la fenêtre entre deux extrémités longitudinales étant chacune en regard d'un bord latéral respectif de la fenêtre, et
une portion d'un au moins des bords latéraux, étant notamment formée par une succession de segments incurvés, délimitant une cavité communiquant avec la fenêtre et s'étendant en éloignement de cette fenêtre.

L'organe de rappel élastique peut comprendre au moins une extrémité longitudinale comprenant un chanfrein, et cet organe de rappel élastique peut être placé dans la fenêtre de manière à ce que l'extrémité longitudinale comprenant le chanfrein soit en regard du bord latéral délimitant la cavité.

Le bord radialement extérieur de la fenêtre peut présenter une portion apte à coopérer avec une extrémité longitudinale de l'organe de rappel, et la fenêtre peut être ménagée de manière à faire saillie dans le support au niveau de ladite portion du bord radialement extérieur, par rapport aux portions dudit bord radialement extérieur adjacentes à ladite portion.

Une sous-épaisseur peut ainsi localement exister, à l'issue de la réalisation de la fenêtre au niveau de ladite portion du bord radialement extérieur de cette fenêtre. On peut, comme mentionné précédemment, alors faire en sorte que cette portion du bord radialement extérieur de la fenêtre prenne dès sa réalisation le profil qu'elle prendrait au fil du temps du fait de l'usure liée au fonctionnement du dispositif.

L'invention pourra être mieux comprise à la lecture de la description qui va suivre d'un exemple non limitatif de mise en oeuvre de celle-ci et à l'examen du dessin annexé sur lequel :
- la figure 1 représente un exemple de support selon un exemple de mise en oeuvre de l'invention,
- la figure 2 est un détail de la figure 1, et
- les figures 3 et 4 représentent de façon extrêmement schématique, respectivement le détail représenté sur la figure 2, et ce même détail sur un support de l'art antérieur.

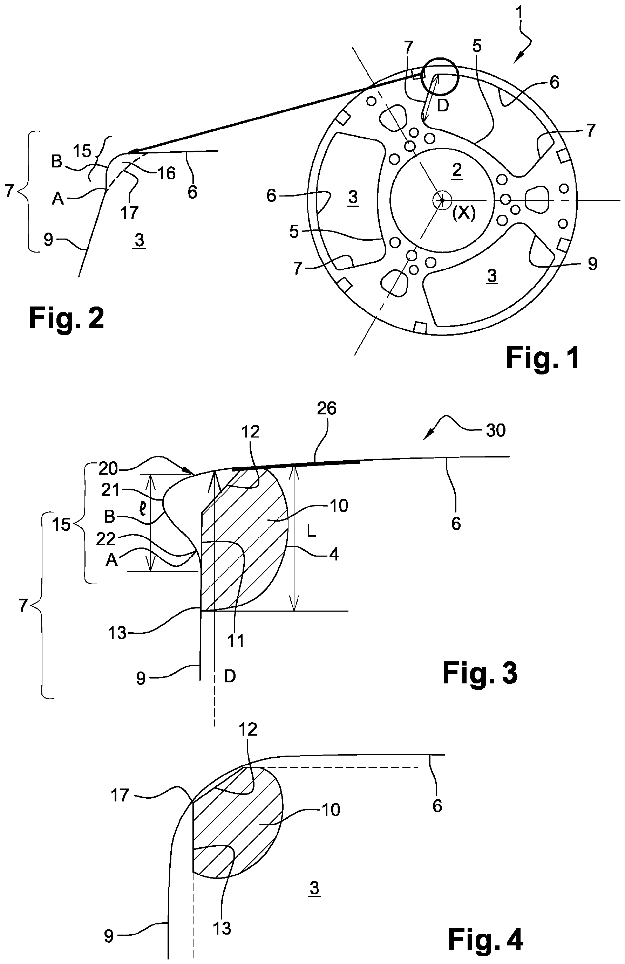

On a représenté sur la figure 1 un support 1 selon un exemple de mise en oeuvre de l'invention. Le support 1 a une forme discoïde, étant apte à être déplacé en rotation autour d'un axe X lorsqu'il est intégré à un système de transmission de véhicule automobile. Le support 1 est par exemple intercalé axialement entre deux rondelles de guidage du système de transmission.

Le support présente une zone radialement intérieure évidée 2 et des fenêtres 3 ménagées sur son pourtour et réparties de façon uniforme autour de l'axe X. Le support 1 de l'exemple décrit comprend trois fenêtres 3. Chacune de ces fenêtres 3 est destinée à loger un organe de rappel élastique 4, dans l'exemple considéré un ressort, qui est visible sur la figure 3. Le support 1 et les organes de rappel élastique 4, et le cas échéant les rondelles de guidage, forment ainsi un dispositif d'amortissement 30.

Chaque fenêtre 3 comprend dans le plan de la figure 1 un bord radialement intérieur 5, un bord radialement extérieur 6, et deux bords latéraux 7, chaque bord latéral 7 reliant une extrémité du bord radialement intérieur 5 à l'extrémité en regard du bord radialement extérieur 6. Chaque bord latéral 6 présente une longueur D.

Comme on peut le voir sur la figure 1, chaque bord latéral 7 présente une portion radialement intérieure 9 qui est sensiblement rectiligne dans le plan de la figure. Chaque portion 9 s'écarte de l'autre portion 9 de la fenêtre 3 lorsque l'on s'éloigne de l'axe de rotation X.

Chaque organe de rappel élastique 4 est disposé dans une fenêtre 3, cet organe de rappel s'étend entre deux extrémités longitudinales 10 dont une seule est représentée sur la figure 3. Dans le plan de la figure 3, la face 11 de cette extrémité 10 tournée vers le bord latéral 7 peut présenter un chanfrein 12. Cette face 11 présente par ailleurs une portion sensiblement rectiligne 13.

Selon l'invention, qui va maintenant être décrite en rapport avec les figures 2 et 3, chaque bord latéral 7 en regard d'une extrémité longitudinale 10 chanfreinée présente une portion 15 délimitant une cavité 16 s'étendant en éloignement de la fenêtre 3, contrairement à l'art antérieur de la figure 5 selon lequel la portion 17 correspondant à la portion 15 de la figure 3 définit une portion de cercle. Cette portion 15 est ici la portion radialement extérieure du bord latéral 7. Dans l'exemple illustré, la portion 15 est formée par une succession de segments incurvés.

La portion 15 formée par la succession de segments incurvés comprend ici une partie convexe et une partie concave, la succession de ces segments définissant ici deux points d'inflexion A et B.

Lorsque l'on se déplace dans le plan des figures 2 et 3 depuis le bord radialement extérieur 6 vers le bord latéral 7, on rencontre d'abord un premier segment incurvé 20 présentant un premier rayon R1, puis un deuxième segment incurvé 21 contenant le point d'inflexion B et présentant un deuxième rayon R2, puis un troisième segment incurvé 22 contenant le point d'inflexion A et présentant un troisième rayon R3.

Dans l'exemple décrit, les segments incurvés 20 et 21 forment la partie convexe tandis que le segment incurvé 22 forme la partie concave. Toujours dans l'exemple décrit, R3<R2<R1. R3 vaut ici 1 mm, R2 vaut ici 1,5 mm et R1 vaut ici 6 mm.

Dans l'exemple considéré, la longueur l de la cavité 16, mesurée parallèlement à la portion radialement intérieure 9 et dans le prolongement de celle-ci, est inférieure à 75%, par exemple égale à 2/3, de la longueur L correspondant à la somme dans le plan de la figure de :
- la longueur de la portion 13 sensiblement rectiligne de la face 11 de l'extrémité longitudinale 10 de l'organe de rappel élastique 4 et,
- la longueur de la projection sur le prolongement de cette portion 13 du chanfrein 12.

Du fait de cette valeur, une fraction importante de la portion 13 n'est pas en regard de la cavité 16 quand l'organe de rappel élastique 4 est déporté radialement vers l'extérieur, et cette fraction de la portion 13 peut alors être plaquée contre la portion 9 du bord latéral 7, afin d'assurer un positionnement satisfaisant de l'extrémité 10 de l'organe de rappel élastique 4.

Lorsque les rayons R1, R2 et R3 des segments formant la portion 15 délimitant la cavité 16 ont des valeurs telles que mentionnées ci-dessus, la longueur de la projection sur le prolongement de la portion 13 du chanfrein 12 peut être égale à 2 mm ou 2,5 mm.

Comme on peut le voir sur la figure 4, en l'absence de cavité 16, la portion radialement extérieure 17 du bord latéral 7, qui est un arc de cercle, tend à éloigner l'extrémité 10 de la portion 9 du bord latéral 7, de sorte que cette extrémité 10 n'est pas plaquée contre le bord latéral 7.

En outre, selon un aspect additionnel et facultatif de l'invention, une sous-épaisseur peut être localement ménagée au niveau d'une portion 26 du bord radialement extérieur 6 de la fenêtre 3 venant en contact avec un bord du chanfrein 12 lorsque le support 1 tourne. Comme représenté sur la figure 3, la fenêtre 3 peut faire saillie dans le support 1 au niveau de portion 26, par rapport aux portions adjacentes du bord radialement extérieur 6.

Du fait de cette sous-épaisseur de la portion 26, lors du fonctionnement du dispositif d'amortissement 30, le bord du chanfrein 12 ne vient pas en contact de ladite portion 26.

Le rapport entre les longueurs 1 et D telles que définies ci-dessus est par exemple supérieur à 0,1. En variante, ce rapport est inférieur à 0,1.

L'invention n'est pas limitée à l'exemple qui vient d'être décrit.

En particulier, le nombre de segments incurvés formant la portion 15 et le nombre de points d'inflexion ne sont pas limités aux valeurs numériques mentionnées ci-dessus.

## Revendications

1. Dispositif d'amortissement (30) pour système de transmission de véhicule, comprenant :
- un support (1) mobile en rotation autour d'un axe (X) et comprenant au moins une fenêtre (3) présentant dans un plan perpendiculaire à l'axe de rotation (X) un bord radialement intérieur (5), un bord radialement extérieur (6), et deux bords latéraux, une portion (15) d'un au moins des bords latéraux (7) délimitant une cavité (16) communiquant avec la fenêtre (3) et s'étendant en éloignement de cette fenêtre (3), (7),
- un organe de rappel élastique (4) reçu dans la fenêtre (3), l'organe de rappel élastique (4) s'étendant dans la fenêtre (3) entre deux extrémités longitudinales (10) étant chacune en regard d'un bord latéral (7) respectif de la fenêtre (3), l'une au moins desdites extrémités longitudinales (10) de l'organe de rappel élastique (4) comprenant notamment un chanfrein (12), et cette extrémité longitudinale (10) étant en regard du bord latéral (7) délimitant la cavité (16), **caractérisé en ce que** :
la portion (15) du bord latéral de la fenêtre délimitant la cavité (16) est la portion radialement extérieure dudit bord latéral (7) de façon à permettre à la cavité (16) d'accueillir une partie de l'extrémité longitudinale de l'organe de rappel élastique (4) lorsque ce dernier est déporté radialement vers l'extérieur du fait de la rotation du support (1).

2. Dispositif d'amortissement selon la revendication 1, dans lequel le support (1) étant différent d'une rondelle de guidage.

3. Dispositif d'amortissement selon la revendication 1 ou 2, dans lequel la portion (15) délimitant la cavité (16) étant formée par une succession de segments incurvés (20, 21,22).

4. Dispositif d'amortissement selon la revendication 3, dans lequel les segments incurvés (20, 21, 22) étant tels que la portion (15) du bord latéral (7) délimitant la cavité (16) présente une partie convexe et une partie concave.

5. Dispositif d'amortissement selon la revendication 4, dans lequel le support est tel que lorsque l'on se déplace le long du contour de la fenêtre (3) depuis le bord radialement extérieur (6) vers le bord radialement intérieur (5) de la fenêtre (3), on se déplace d'abord le long de la partie convexe, puis le long de la partie concave.

6. Dispositif d'amortissement selon l'une quelconque des revendications précédentes, dans lequel la cavité (16) ne s'étend pas radialement au-delà du bord radialement extérieur (6) de la fenêtre (3).

7. Dispositif d'amortissement selon l'une quelconque des revendications précédentes, dans lequel la cavité (16) est délimitée radialement intérieurement et radialement extérieurement par des bords qui convergent lorsque l'on s'éloigne de la fenêtre (3).

8. Dispositif d'amortissement selon l'une quelconque des revendications 1 à 7, comprenant deux cavités (16) communiquant avec la fenêtre (3), chaque bord latéral (7) comprenant une portion (15), notamment formée par une succession de segments incurvés (20, 21, 22), délimitant une cavité (16) s'étendant en éloignement de la fenêtre (3) et communiquant avec cette fenêtre (3).

9. Dispositif d'amortissement selon l'une des revendications précédentes, dans lequel l'extrémité longitudinale chanfreinée (10) de l'organe de rappel élastique (4) présente une face (11) tournée vers ledit bord latéral (7) de la fenêtre (3), cette face (11) comprenant :
- une portion (13) sensiblement rectiligne, et
- le chanfrein (12), ledit chanfrein étant apte à venir en regard de la cavité (16).

10. Dispositif selon la revendication 9, dans lequel l'organe de rappel élastique (4) est un ressort hélicoïdal, et la longueur (l) de la cavité (16), mesurée dans ledit plan entre deux bord opposés de la cavité (16) et parallèlement à une portion (9) rectiligne du bord latéral (7) et dans le prolongement de cette portion (9), est inférieure à 75%, notamment être de l'ordre de 2/3, de la somme de la longueur dans ledit plan :
- de la portion (13) sensiblement rectiligne de ladite face (11) de l'extrémité longitudinale (10) de l'organe de rappel élastique (4) et,
- de la projection sur le prolongement de cette portion (13) sensiblement rectiligne du chanfrein (12).

11. Dispositif selon l'une quelconque des revendications précédentes, comprenant deux rondelles de guidage axialement décalées, chaque organe de rappel élastique (4) étant d'une part apte à coopérer avec les rondelles de guidage et d'autre part avec le support (1), le support (1) étant axialement disposé entre les rondelles de guidage.

12. Dispositif d'amortissement selon l'une des revendications précédentes, dans lequel la cavité (16) est ménagée uniquement au niveau dudit bord latéral (7) de la fenêtre.

## Patentansprüche

1. Dämpfungsvorrichtung (30) für ein Fahrzeuggetriebesystem, aufweisend:
- einen Träger (1), welcher um eine Achse (X) drehbeweglich ist und mindestens ein Fenster (3) aufweist, welches in einer Ebene senkrecht zu der Drehachse (X) einen radial inneren Rand (5), einen radial äußeren Rand (6) und zwei seitliche Ränder vorweist, wobei ein Abschnitt (15) von mindestens einem der seitlichen Ränder (7) einen Hohlraum (16) begrenzt, welcher mit dem Fenster (3) kommuniziert und sich von diesem Fenster (3), (7) weg erstreckt,
- ein elastisches Rückstellorgan (4), welches in dem Fenster (3) aufgenommen ist, wobei sich das elastische Rückstellorgan (4) in dem Fenster (3) zwischen zwei longitudinalen Enden (10) erstreckt, welche jeweils einem jeweiligen seitlichen Rand (7) des Fensters (3) gegenüber liegen, wobei mindestens eines der longitudinalen Enden (10) des elastischen Rückstellorgans (4) insbesondere eine Fase (12) aufweist und wobei dieses longitudinale Ende (10) dem seitlichen Rand (7), welcher den Hohlraum (16) abgrenzt, gegenüber liegt, **dadurch gekennzeichnet, dass**:
der Abschnitt (15) des seitlichen Randes des Fensters, welcher den Hohlraum (16) abgrenzt, der radial äußere Abschnitt des seitlichen Randes (7) ist, um es dem Hohlraum (16) zu ermöglichen, einen Teil des longitudinalen Endes des elastischen Rückstellorgans (4) aufzunehmen, wenn dieses Letztere aufgrund der Drehung des Trägers (1) radial nach außen abgedrängt wird.

2. Dämpfungsvorrichtung nach Anspruch 1, bei welcher der Träger (1) von einer Führungsscheibe verschieden ist.

3. Dämpfungsvorrichtung nach Anspruch 1 oder 2, bei welcher der Abschnitt (15), welcher den Hohlraum (16) abgrenzt, durch eine Folge von gekrümmten Segmenten (20, 21, 22) gebildet ist.

4. Dämpfungsvorrichtung nach Anspruch 3, bei welcher die gekrümmten Segmente (20, 21, 22) derartig sind, dass der Abschnitt (15) des seitlichen Randes (7), welcher den Hohlraum (16) abgrenzt, einen konvexen Teil und einen konkaven Teil vorweist.

5. Dämpfungsvorrichtung nach Anspruch 4, bei welcher der Träger derartig ist, dass, wenn man sich entlang der Kontur des Fensters (3) von dem radial äußeren Rand (6) zu dem radial inneren Rand (5) des Fensters (3) bewegt, man sich zunächst entlang des konvexen Teils und dann entlang des konkaven Teils bewegt.

6. Dämpfungsvorrichtung nach einem der vorhergehenden Ansprüche, bei welcher der Hohlraum (16) sich nicht radial über den radial äußeren Rand (6) des Fensters (3) hinaus erstreckt.

7. Dämpfungsvorrichtung nach einem der vorhergehenden Ansprüche, bei welcher der Hohlraum (16) radial nach innen und radial nach außen von Rändern begrenzt ist, welche konvergieren, wenn man sich von dem Fenster (3) entfernt.

8. Dämpfungsvorrichtung nach einem der Ansprüche 1 bis 7, aufweisend zwei Hohlräume (16), welche mit dem Fenster (3) kommunizieren, wobei jeder seitliche Rand (7) einen Abschnitt (15) aufweist, welcher insbesondere durch eine Folge von gekrümmten Segmenten (20, 21, 22) gebildet ist, welcher einen Hohlraum (16) abgrenzt, welcher sich von dem Fenster (3) weg erstreckt und mit dem Fenster (3) kommuniziert.

9. Dämpfungsvorrichtung nach einem der vorhergehenden Ansprüche, bei welcher das abgefaste, longitudinale Ende (10) des elastischen Rückstellorgans (4) eine Fläche (11) vorweist, welche in Richtung auf den seitlichen Rand (7) des Fensters (3) gedreht ist, wobei diese Fläche (11) aufweist:
- einen im wesentlichen geraden Abschnitt (13), und
- die Fase (12), wobei die Fase geeignet ist, gegenüber des Hohlraums (16) zu gelangen.

10. Vorrichtung nach Anspruch 9, bei welchem das elastische Rückstellorgan (4) eine Schraubenfeder ist und die Länge (l) des Hohlraums (16), welche in der Ebene zwischen zwei gegenüberliegenden Rändern des Hohlraums (16) und parallel zu einem geraden Abschnitt (9) des seitlichen Randes (7) und in der Verlängerung dieses Abschnitts (9) gemessen wird, kleiner als 75%, insbesondere in der Größenordnung von 2/3, der Summe der Länge in der Ebene:
- des im Wesentlichen geraden Abschnitts (13) der Fläche (11) des longitudinalen Endes (10) des elastischen Rückstellorgans (4) und
- des Vorsprungs in der Verlängerung dieses im Wesentlichen geraden Abschnitts (13) der Fase (12) ist.

11. Vorrichtung nach einem der vorhergehenden Ansprüche, aufweisend zwei axial versetzte Führungsscheiben, wobei jedes elastische Rückstellorgan (4) dafür geeignet ist, um einerseits mit den Führungsscheiben und andererseits mit dem Träger (1) zusammenzuwirken, wobei der Träger (1) axial zwischen den Führungsscheiben angeordnet ist.

12. Dämpfungsvorrichtung nach einem der vorhergehenden Ansprüche, bei welcher der Hohlraum (16) lediglich im Bereich des seitlichen Randes (7) des Fensters vorgesehen ist.

## Claims

1. Damping device (30) for a vehicle transmission system, comprising:
- a support (1) rotatable about an axis (X) and comprising at least one window (3) having, in a plane perpendicular to the axis of rotation (X), a radially inner edge (5), a radially outer edge (6), and two lateral edges, a portion (15) of at least one of the lateral edges (7) delimiting a cavity (16) communicating with the window (3) and extending away from this window (3), (7),
- an elastic return member (4) received in the window (3), the elastic return member (4) extending in the window (3) between two longitudinal ends (10) each facing a respective lateral edge (7) of the window (3), at least one of said longitudinal ends (10) of the elastic return member (4) comprising in particular a chamfer (12), and this longitudinal end (10) facing the lateral edge (7) delimiting the cavity (16), **characterized in that**:
the portion (15) of the lateral edge of the window delimiting the cavity (16) is the radially outer portion of said lateral edge (7) so as to allow the cavity (16) to accommodate part of the longitudinal end of the elastic return member (4) when the latter is offset radially outwards on account of the rotation of the support (1).

2. Damping device according to Claim 1, in which the support (1) is different from a guide washer.

3. Damping device according to Claim 1 or 2, in which the portion (15) delimiting the cavity (16) is formed by a succession of curved segments (20, 21, 22).

4. Damping device according to Claim 3, in which the curved segments (20, 21, 22) are such that the portion (15) of the lateral edge (7) delimiting the cavity (16) has a convex part and a concave part.

5. Damping device according to Claim 4, in which the support is such that, when following a path along the contour of the window (3) from the radially outer edge (6) to the radially inner edge (5) of the window (3), the path first runs along the convex part and then along the concave part.

6. Damping device according to any one of the preceding claims, in which the cavity (16) does not extend radially beyond the radially outer edge (6) of the window (3).

7. Damping device according to any one of the preceding claims, in which the cavity (16) is delimited radially to the inside and radially to the outside by edges which converge when moving away from the window (3).

8. Damping device according to any one of Claims 1 to 7, comprising two cavities (16) communicating with the window (3), each lateral edge (7) comprising a portion (15), in particular formed by a succession of curved segments (20, 21, 22), delimiting a cavity (16) extending away from the window (3) and communicating with this window (3).

9. Damping device according to one of the preceding claims, in which the chamfered longitudinal end (10) of the elastic return member (4) has a face (11) directed towards said lateral edge (7) of the window (3), this face (11) comprising:
- a substantially rectilinear portion (13), and
- the chamfer (12), said chamfer being able to face the cavity (16).

10. Device according to Claim 9, in which the elastic return member (4) is a helical spring, and the length (l) of the cavity (16), measured in said plane between two opposite edges of the cavity (16) and parallel to a rectilinear portion (9) of the lateral edge (7) and in the continuation of this portion (9), is less than 75%, in particular of the order of 2/3, of the sum of the length in said plane:
- of the substantially rectilinear portion (13) of said face (11) of the longitudinal end (10) of the elastic return member (4), and
- of the projection of the chamfer (12) onto the continuation of this substantially rectilinear portion (13).

11. Device according to any one of the preceding claims, comprising two axially offset guide washers, each elastic return member (4) being able to cooperate, on the one hand, with the guide washers and, on the other hand, with the support (1), the support (1) being axially located between the guide washers.

12. Damping device according to one of the preceding claims, in which the cavity (16) is formed only at said lateral edge (7) of the window.
